# EUROPEAN PATENT APPLICATION

(11) **EP 3 251 494 A1**
(43) Date of publication of application: **06.12.2017**
(21) Application number: 16189496.9
(22) Date of filing: 19.09.2016
(51) Int. Cl.: A01G 9/10, A01G 31/00

(54) **PLANT CULTIVATION SOLID MEDIUM FOR PLANTING A PLANT**

(30) Priority: 30.05.2016 TW 105116817
(71) Applicant: Chang, Te-Sheng, 80457 Kaohsiung City (TW)
(72) Inventor: Chang, Te-Sheng, 80457 Kaohsiung City (TW)
(74) Representative: BSB Intellectual Property Law

(57) **Abstract**

A plant cultivation solid medium for potting a plant includes a water retention block body (2). The water retention block body (2) has a top surface (23), a plant-receiving chamber (213) that is indented from the top surface (23) and formed with a top opening in the top surface (23), a bottom surface (24) opposite to the top surface (23), and an air chamber (221) indented from the bottom surface (24) and formed with a bottom opening (223) in the bottom surface (24). The bottom opening (223) has a cross-sectional dimension greater than that of the top opening (214).

## Description

The disclosure relates to a plant cultivation solid medium, and more particularly to a plant cultivation solid medium for potting a plant.

Currently, potting a plant generally includes the steps of filling a container with growing media, such as fern, sphagnum, or peat, etc., digging the growing media filled in the container to form a receiving space, and potting the plant in the receiving space. However, the aforesaid plant-potting method is relatively complicated and is difficult to be automated.

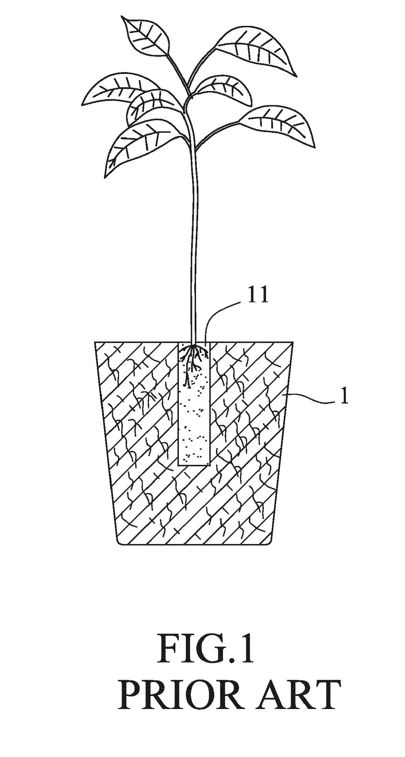

Referring to FIG. 1, for providing a plant cultivation medium suitable for automated plant potting, Taiwanese Utility Model Patent No. M490206 discloses a water absorption medium for potting a plant. The water absorption medium includes a block body 1 that is made from a mixture of sawdust and a binding agent, so as to have relatively great water absorption and water retention. The block body 1 is further formed with a plant-receiving chamber for receiving a plant. However, when the block body 1 is disposed in a container, such as a flowerpot, a bottom portion of the block body 1 is sultry, damp and unventilated. Hence, the water absorption medium tends to mildew.

Therefore, an object of the disclosure is to provide a plant cultivation solid medium that can alleviate at least one of the drawbacks of the prior art.

According to the disclosure, a plant cultivation solid medium for potting a plant includes a water retention block body. The water retention block body has a top surface, a plant-receiving chamber that is indented from the top surface and formed with a top opening in the top surface, a bottom surface opposite to the top surface, and an air chamber indented from the bottom surface and formed with a bottom opening in the bottom surface. The bottom opening has a cross-sectional dimension greater than that of the top opening.

Other features and advantages of the disclosure will become apparent in the following detailed description of the embodiments with reference to the accompanying drawings, of which:
FIG. 1 is a schematic view illustrating a conventional plant cultivation medium disclosed in Taiwanese Utility Model Patent No. M490206;
FIG. 2 is a perspective schematic view illustrating an embodiment of a plant cultivation solid medium according to the disclosure;
FIG. 3 is a schematic view illustrating the embodiment;
FIG. 4 is a perspective view illustrating a modification of the embodiment; and
FIG. 5 is a cross-sectional schematic view illustrating the modification of FIG. 4.

Before the disclosure is described in greater detail, it should be noted that where considered appropriate, reference numerals or terminal portions of reference numerals have been repeated among the figures to indicate corresponding or analogous elements, which may optionally have similar characteristics.

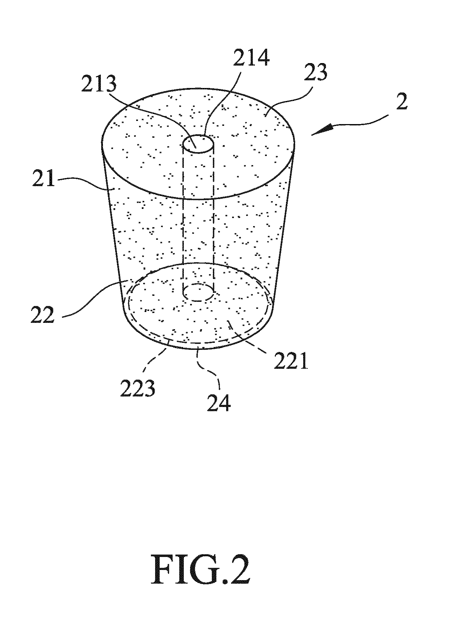

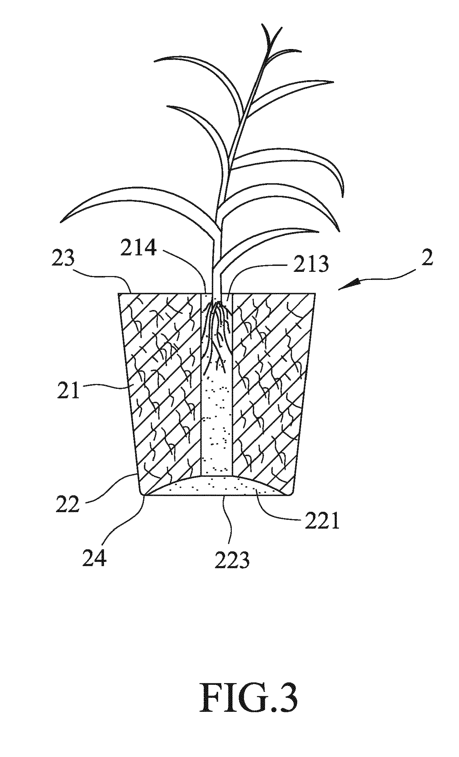

Referring to FIGS. 2 and 3, an embodiment of a plant cultivation solid medium for potting a plant according to the disclosure includes a water retention block body 2. The water retention block body 2 includes a top surface 23, a plant-receiving chamber 213, a bottom surface 24 opposite to the top surface 23, and an air chamber 221. The plant-receiving chamber 213 is indented from the top surface 23 and formed with a top opening 214 in the top surface 23. The air chamber 221 is indented from the bottom surface 24 and formed with a bottom opening 223 in the bottom surface 24. The bottom opening 223 has a cross-sectional dimension greater than that of the top opening 214. In the embodiment, the water retention block body 2 further includes a receiving-chamber defining portion 21 that has the top surface 23 and is formed with the plant-receiving chamber 213, and an air-chamber defining portion 22. The air-chamber defining portion 22 extends downwardly from the receiving-chamber defining portion 21, has the bottom surface 24, and is formed with the air chamber 221.

In the embodiment, the air chamber 221 is in spatial communication with the plant-receiving chamber 213 and has a maximum cross-sectional dimension greater than that of the plant-receiving chamber 213. The plant-receiving chamber 213 has a top end adjacent to the top surface 23 and a bottom end opposite to the top end and adjacent to the air-chamber defining portion 22. The cross-sectional dimension of the plant-receiving chamber 213 may be constant in the direction from the top end to the bottom end thereof. The air chamber 221 has a top end adjacent to the receiving-chamber defining portion 21 and a bottom end opposite to the top end and adjacent to the bottom surface 24. The cross-sectional dimension of the air chamber 221 is gradually decreased in the direction from the top end to the bottom end thereof. More specifically, the top end of the air chamber 221 is directly connected to the bottom end of the plant-receiving chamber 213 for air convection.

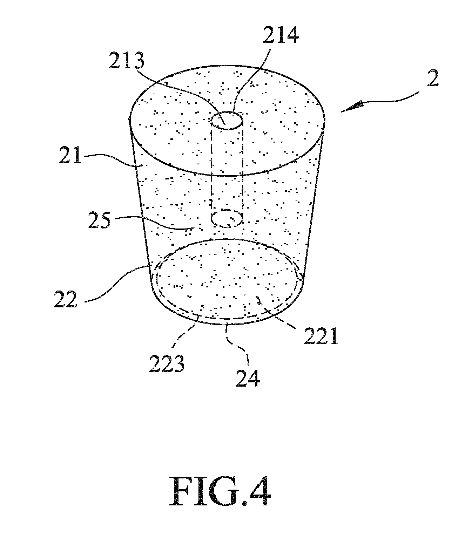

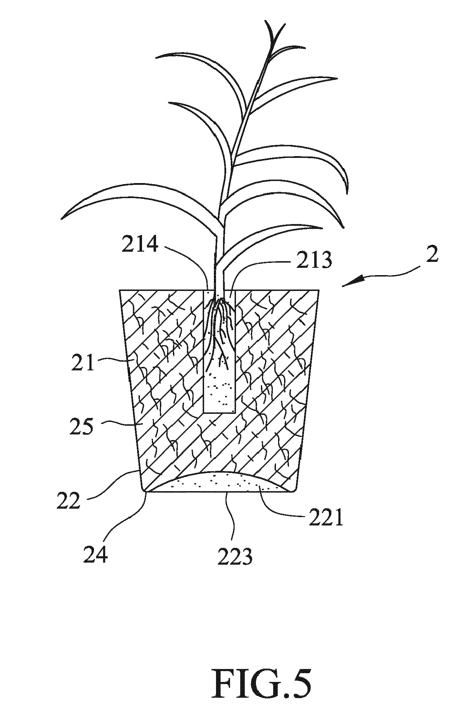

Referring to FIGS. 4 and 5, the plant cultivation solid medium shown in FIGS. 2 and 3 is modifiable to further include a separation portion 25 in the water retention block body 2. The separation portion 25 is interposed between the receiving-chamber defining portion 21 and the air-chamber defining portion 22 for separating the plant-receiving chamber 213 from the air chamber 221. In the embodiment, the bottom surface 24 is concaved toward the top surface so as to form a concaved wall surface that defines the bottom opening 223 and the air chamber 221.

More specifically, the water retention block body 2 is a one-piece molded block, and is made from a solidification mixture that includes a plant cultivation medium material and a binding agent. The plant cultivation medium material may be made from, but not limited to, growing media specified in Section 319.7-8, Title 7 of Code of Federal Regulations of the U.S.A. (7 CFR 319.37-8), such as sphagna, coconut fibers, peat, foam lianshi, cinders, cork leathers, glass wool, organic fibers, inorganic fibers, pearl stones, charcoal cotton, or volcanic rock. The binding agent may be made from, but not limited to, an organic or inorganic nontoxic material.

When the plant cultivation solid medium of the disclosure is received in a flowerpot (not shown), airflow is adapted to pass through a drainage hole of the flowerpot into the air chamber 221 of the water retention block body 2. Hence, even if the air-chamber defining portion 22 of the water retention block body 2 is kept moist with water, mildew growth is avoided due to adequate air circulation in the air chamber 221. A spread of mildew growth to the plant received in the plant-receiving chamber 213 is further avoided. Furthermore, the air circulation in the water retention block body 2 is further improved due to spatial communication between the air chamber 221 and the plant-receiving chamber 213.

It is worth noting that when an aerial root plant, such as an orchid, is planted in the plant cultivation solid medium of the disclosure, the great ventilation and air circulation are achieved by forming the air chamber 221 and making the maximum cross-sectional size of the air chamber 221 greater than that of the plant-receiving chamber 213. The moisture and the temperature of the plant cultivation solid medium are also adjustable thereby so as to be favorable for pest control. Therefore, the orchid can grow healthily.

In summary, by virtue of the structural configuration of the water retention block body 2, optimal ventilation of the plant-receiving chamber 213 can be obtained. Thus, the plant, especially the plant with aerial roots or the epiphyte, such as the orchid, potted in the plant-receiving chamber 213 of the water retention block body 2 can be healthily grown without worrying about mildewing and has relatively sufficient space for extension and growth of the roots.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A plant cultivation solid medium for potting a plant, including a water retention block body (2), which has a top surface (23), a plant-receiving chamber (213) that is indented from the top surface (23) and formed with a top opening (214) in the top surface (23), and a bottom surface (24) opposite to the top surface (23), **characterized by** an air chamber (221) indented from the bottom surface (24) and formed with a bottom opening (223) in the bottom surface (24), said bottom opening (223) having a cross-sectional dimension greater than that of the top opening (214).

2. The plant cultivation solid medium of Claim 1, **characterized in that** the water retention block body (2) includes a receiving-chamber defining portion (21) that has the top surface (23) and is formed with the plant-receiving chamber (213), and an air-chamber defining portion (22) that extends downwardly from said receiving-chamber defining portion (21), has the bottom surface (24) and is formed with said air chamber (221).

3. The plant cultivation solid medium of Claim 2, further **characterized in that** said air chamber (221) is in spatial communication with the plant-receiving chamber (213) and has a maximum cross-sectional dimension greater than that of the plant-receiving chamber (213), a top end of said air chamber (221) being directly connected to a bottom end of the plant-receiving chamber (213).

4. The plant cultivation solid medium of Claim 2, further **characterized in that** the water retention block body (2) further includes a separation portion (25) interposed between said receiving-chamber defining portion (21) and said air-chamber defining portion (22) for separating the plant-receiving chamber (213) from said air chamber (221).

5. The plant cultivation solid medium of Claim 1, further **characterized in that** said bottom surface (24) is concaved toward the top surface (23) so as to form a concaved wall surface (24) that defines said bottom opening (223) and said air chamber (221).

6. The plant cultivation solid medium of Claim 5, further **characterized in that** the water retention block body (2) is a one-piece molded block.

7. The plant cultivation solid medium of Claim 5, further **characterized in that** the water retention block body (2) is made from a solidification mixture including a plant cultivation medium material and a binding agent.
